# EUROPEAN PATENT APPLICATION

(11) **EP 4 207 354 A1**
(43) Date of publication of application: **05.07.2023**
(21) Application number: 20966466.3
(22) Date of filing: 24.12.2020
(51) Int. Cl.: H01M 4/131

(54) **POSITIVE ELECTRODE AND ELECTROCHEMICAL DEVICE**

(71) Applicant: Dongguan Amperex Technology Limited, Dongguan City, Guangdong Province 523000 (CN)
(72) Inventor: WANG, Kai, Dongguan, Guangdong 523000 (CN); WU, Xia, Dongguan City Guangdong Province 523000 (CN)
(74) Representative: Icosa
(86) International application number: PCT/CN2020/138985
(87) International publication number: WO 2022/133894

(57) **Abstract**

This application provides a positive electrode, an electrochemical apparatus and an electronic apparatus. The positive electrode includes a positive electrode active material layer on a current collector, the positive electrode active material layer including a lithium transition metal composite oxide, where in a direction parallel to a plane on which the current collector is located, an average particle size of the lithium transition metal composite oxide is Dp, and in a direction perpendicular to the plane on which the current collector is located, an average particle size of the lithium transition metal composite oxide is Dv, satisfying: 1.1≤Dp/Dv≤2.3.

## Description

### TECHNICAL FIELD

This application relates to the field of battery technologies, and specifically, to a positive electrode and an electrochemical apparatus.

### BACKGROUND

The development of new energy technologies and the progress of study on energy storage materials have resulted in a wider application of secondary batteries such as lithium-ion batteries, along with which are stricter requirements from the market on the performance of secondary batteries. The positive electrode is an important factor for influencing the performance of secondary batteries, and the shape of lithium transition metal composite oxides has a great influence on the capacity and stability of the positive electrode.

Therefore, the existing positive electrodes and secondary batteries still need to be improved.

### SUMMARY

This application is intended to resolve the technical problems in the related art at least to some extent. For this purpose, one of the objectives of this application is to propose a positive electrode, where, by controlling morphology of a lithium transition metal composite oxide and an orientation of the lithium transition metal composite oxide on a surface of a current collector, the positive electrode is able to improve the capacity of intercalation and deintercalation of lithium ions of the lithium transition metal composite oxide on a side contacting electrolyte and offer improved stability, alleviating problems such as pulverization caused by particle phase changes.

According to one aspect of this application, this application provides a positive electrode. The positive electrode includes: a positive electrode active material layer on a current collector, the positive electrode active material layer including a lithium transition metal composite oxide, where an average particle size of the lithium transition metal composite oxide in a direction parallel to a plane on which the current collector is located is Dp and an average particle size of the lithium transition metal composite oxide in a direction perpendicular to the plane on which the current collector is located is Dv, satisfing 1.1≤Dp/Dv≤2.3. The inventors have found that controlling particle shape of the lithium transition metal composite oxide and regulating a distribution orientation of the lithium transition metal composite oxide on the surface of the current collector can alleviate problems such as pulverization caused by phase changing and cracking of the lithium transition metal composite oxides during use (charge and discharge) of the positive electrode. Therefore, the positive electrode has relatively good high-voltage cycling performance.

According to some examples of this application, the lithium transition metal composite oxide satisfies 5µm≤Dp≤25 µm. Therefore, the lithium transition metal composite oxide has a relatively good orientation on the current collector, making more reasonable arrangements of dominant crystal planes and non-dominant crystal planes in particles, thereby making the positive electrode have a relatively good high-voltage cycling performance.

According to some examples of this application, the lithium transition metal composite oxide satisfies 0.8≤(Dp+Dv)/2D_{N}50≤1.25, where D_{N}50 is a median particle size of the lithium transition metal composite oxide.

According to some examples of this application, the lithium transition metal composite oxide has an R-3m space group structure.

According to some examples of this application, the lithium transition metal composite oxide includes Liₓ₁Ni_{y1}Co_{z1}MnₖZ_{q}O_{b-a}Tₐ, where Z includes at least one of B, Mg, Al, Si, P, S, Ti, Cr, Fe, Cu, Zn, Ga, Y, Zr, Mo, Ag, W, In, Sn, Pb, Sb and Ce, T is halogen, and x1, y1, z1, k, q, a and b respectively satisfy 0.2<x1≤1.2, 0≤y1≤1, 0≤z1≤1, 0≤k≤1, 0≤q≤1, 1≤b≤2 and 0≤a≤1.

According to some examples of this application, the lithium transition metal composite oxide has a P63mc space group structure.

According to some examples of this application, the lithium transition metal composite oxide includes Liₓ₂Na_{z2}Co_{1-y2}M_{y2}O_{2±n}Xₙ, where 0.6<x2<0.95, 0≤y2<0.15, 0≤z2<0.03 and 0≤n≤0.2, M includes at least one of Al, Mg, Ti, Mn, Fe, Ni, Zn, Cu, Nb, Cr and Zr, and X is halogen.

According to some examples of this application, when an electrochemical apparatus including the positive electrode is charged to 4.6 V, the positive electrode satisfies that an X-ray diffraction spectrum at least has a characteristic peak P₁ and a characteristic peak P₂ in a range of 17° to 20°, where a peak intensity I₁ of P₁ is greater than a peak intensity I₂ of P₂.

According to some examples of this application, when the electrochemical apparatus including the positive electrode is discharged to 3.0 V, the positive electrode satisfies that an X-ray diffraction spectrum has a characteristic peak P₃ in a range of 17° to 20°. A peak intensity I₃ of P₃ satisfies (I₁-I₂)<I₃<(I₁+I₂). Therefore, the positive electrode can have better cycling stability.

According to some examples of this application, a ratio I₁/I₃ of the peak intensity I₁ of P1 to the peak intensity I₃ of P₃ is not less than 0.8. Therefore, the lithium transition metal composite oxide in the positive electrode can maintain relatively good crystallinity during cycling.

According to some examples of this application, the lithium transition metal composite oxide has a long-axis average particle size D₁ and a short-axis average particle size D₂, satisfing 1.4≤(D₁/D₂)≤5.5. According to some examples of this application, the lithium transition metal composite oxide has a long-axis average particle size D₁ and a short-axis average particle size D₂, satisfing 1.4≤(D₁/D₂)≤3.8. Therefore, the lithium transition metal composite oxide has a relatively good particle morphology, where active crystal planes and inactive crystal planes are in proper proportions.

According to some examples of this application, 7µm≤D₁≤28µm.

According to some examples of this application, the positive electrode satisfies: when an electrochemical apparatus including the positive electrode has undergone 8 charge and discharge cycles in a range of 3.0 V to 4.6 V and is discharged to 3.0 V, a highest peak of an X-ray diffraction spectrum of the positive electrode having undergone the cycles has a peak shift of no greater than 0.1° with respect to the positive electrode without undergoing the cycles; and a change rate of peak width at half height of the highest peak is below 5%. Therefore, particles of the positive electrode have relatively good cycling performance.

According to another aspect of this application, this application proposes an electrochemical apparatus. The electrochemical apparatus includes the foregoing positive electrode, a negative electrode, and a separator. Therefore, the secondary battery has all the features and advantages of the foregoing positive electrode, and details are not described herein again.

According to an example of this application, when the electrochemical apparatus is discharged to 3.0 V, a surface of the negative electrode has strips.

According to still another aspect of this application, this application proposes a preparation method of the foregoing positive electrode. The method includes providing a lithium transition metal composite oxide, and mixing the lithium transition metal composite oxide with a conductive agent and a binder to form a positive electrode slurry; applying the positive electrode slurry on a surface of a current collector; and cold pressing the current collector coated with the positive electrode slurry, where the cold pressing is performed under a pressure of 30 to 40 tons with a cold pressing velocity being 3 to 4 m/min and a press density being controlled to 4.05 to 4.25 g/cm³. Therefore, the foregoing positive electrode can be easily obtained and can be provided with relatively good cycling performance.

According to some examples of this application, a weight ratio of the lithium transition metal composite oxide, the conductive agent, and the binder in the positive electrode slurry is (94-99):(0.5-3):(0.5-3). Therefore, the positive electrode slurry having a proper ratio of the conductive agent, the lithium transition metal composite oxide, and the binder can be obtained.

According to some examples of this application, after the positive electrode slurry is applied on the surface of the current collector and before the cold pressing is performed, the method further includes drying the positive electrode slurry on the surface of the current collector; and after the cold pressing is performed, the method further includes: cutting the current collector.

According to yet still another aspect of this application, this application proposes a negative electrode modification method. The method includes spreading an additive on a surface of a negative electrode active material layer, and performing rolling, where the additive includes at least one of lithium powder, lithium strip, and lithium-containing compound.

### BRIEF DESCRIPTION OF DRAWINGS

FIG. 1 is a schematic structural diagram of a positive electrode according to an example of this application;
FIG. 2 is a schematic structural diagram of an electrochemical apparatus according to an example of this application;
FIG. 3 is a schematic flowchart of a preparation method of a positive electrode according to an example of this application;
FIG. 4 is a scanning electron microscope image of a positive electrode according to Example 1 of this application;
FIG. 5 is an X-ray diffraction pattern of the positive electrode according to Example 1 of this application;
FIG. 6 is an X-ray diffraction pattern of a positive electrode according to Comparative Example 1 of this application;
FIG. 7 is an optical photograph of a negative electrode according to Example 1 of this application;
FIG. 8 is an optical photograph of a negative electrode according to Comparative Example 1 of this application; and
FIG. 9 is a diagram of cycling performance test results of Example 1 and Comparative Example 1 of this application.

Reference signs are described as follows:
100: positive electrode; 110: current collector; 120A to 120C: lithium transition metal composite oxides; 120: active material layer; 200: separator; 300: negative electrode; and 1000: electrochemical apparatus.

### DESCRIPTION OF EMBODIMENTS

The following describes some embodiments of this application in detail. The embodiments described below are exemplary and only used to explain this application, which cannot be understood as limitations on this application. Examples for which no technology or conditions are specified are made based on technology or conditions described in literature in the field, or made based on product instructions. Reagents or instruments used are all conventional products that are commercially available if no manufacturer is indicated.

This application is made on the basis of the following knowledge and discovery of the inventors:

For prior positive electrodes, for example, positive electrodes of lithium-ion secondary batteries, their performance can be regulated by controlling the particle size and shape of active lithium-containing materials in a lithium transition metal composite oxide, but cycling performance of the prior positive electrodes still need to be improved. The inventors have found that in addition to morphological characteristics of the lithium transition metal composite oxide, an orientation of the lithium transition metal composite oxide on a current collector can also influence the performance of the positive electrode. Particularly, the lithium transition metal composite oxide is typically not perfectly symmetrical spherical particles, and the shape of a positive electrode material is limited by growth of its crystal planes, where dominant crystal planes in the particles grow faster and other crystal planes grow more slowly. Therefore, the lithium transition metal composite oxide exhibits an oval shape rather than a perfect spherical shape in most cases. With regulation applied to the synthesis condition, proportions of crystal planes in the resulting lithium transition metal composite oxide also change. For example, with too many dominant crystal planes present in the lithium transition metal composite oxide, a long side of an ellipsoid of the resulting lithium transition metal composite oxide is far longer than a short side thereof, while reducing the proportion of dominant crystal planes and increasing other crystal planes can obtain particles close to spheres. For a cobalt-based material, specifically for lithium cobalt oxide, the dominant planes are unable to intercalate and deintercalate lithium but are very stable, while crystal planes taking up the greatest proportion in non-dominant planes, such as crystal plane 104, are able to intercalate and deintercalate lithium but unstable and prone to phase change. Therefore, with too many dominant planes, the deintercalation of lithium of the material is impacted and the material is difficult to process due to an over-flat shape; on the contrary, with too many non-dominant planes, surfaces of the particles are unstable and apt to fail due to phase change. During formation of the positive electrode, the lithium transition metal composite oxide is typically mixed with components such as conductive particles and binders to form a slurry, then the slurry is applied on a surface of a current collector of the positive electrode, and after processes including drying, cold pressing, and the like, the lithium transition metal composite oxide will be distributed on the surface of the current collector in a certain orientation.

Because the lithium transition metal composite oxide is asymmetrical particles, the performance of the lithium transition metal composite oxide cannot be given full play without controlling the distribution orientation of the lithium transition metal composite oxide on the current collector. For example, with dominant planes being excessively exposed on a side of the current collector facing electrolyte, although the positive electrode has good stability, a distance between non-dominant planes and the electrolyte increases, affecting the performance of intercalation and deintercalation of lithium of the positive electrode. With non-dominant planes being excessively exposed on the side of the current collector facing the electrolyte, the positive electrode has poorer stability and the positive material is easy to pulverize. In addition, with the lithium transition metal composite oxide being damaged during processing, being unevenly distributed on the surface of the current collector of the positive electrode, or having a chaos orientation, electrochemical performance of the lithium transition metal composite oxide cannot be given full play.

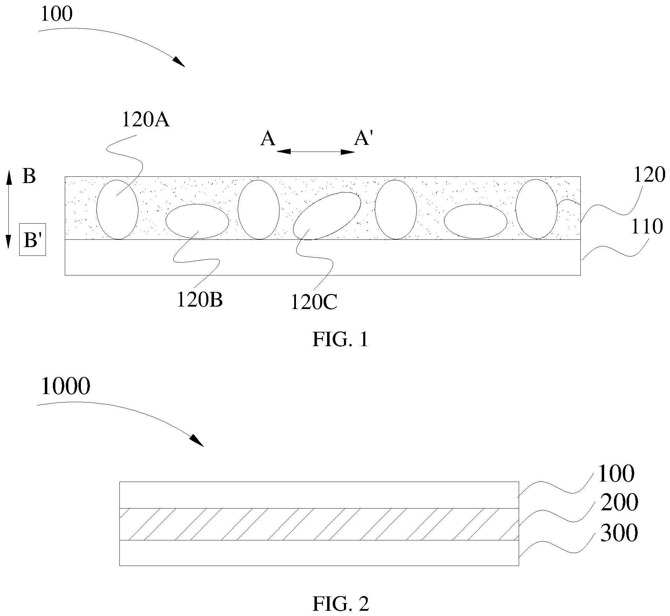

In view of this, according to one aspect of this application, this application provides a positive electrode. Referring to FIG. 1, the positive electrode 100 includes a current collector 110 and an active material layer 120, where the active material layer 120 is located on the current collector 110 and includes a lithium transition metal composite oxide 120A, 120B, and 120C. A ratio Dp/Dv of an average particle size Dp of the lithium transition metal composite oxide 120A, 120B, and 120C in a direction parallel to a plane on which the current collector 110 is located (direction A-A' shown in the figure) to an average particle size Dp of same in a direction perpendicular to the plane on which the current collector 110 is located (direction B-B' shown in the figure) satisfies 1.1≤Dp/Dv≤2.3. The inventors have found that the positive electrode has a relatively good high-voltage cycling performance and controlling particle shape of the lithium transition metal composite oxide and regulating a distribution orientation of the lithium transition metal composite oxide on the surface of the current collector can alleviate problems such as pulverization caused by phase changing and cracking of the lithium transition metal composite oxides during use (charge and discharge) of the positive electrode.

As described above, because the lithium transition metal composite oxide is distributed in an intended orientation when being distributed on the current collector, controlling the ratio of Dp to Dv of the lithium transition metal composite oxide helps better measure the distribution of the lithium transition metal composite oxide on the surface of the current collector. Therefore, electrochemical performance of the lithium transition metal composite oxide can be brought to good play in respect of the positive electrode. Specifically, for ellipsoid-shaped or flat particles, generally, if the lithium transition metal composite oxide is distributed with long axis diameters of the particles being mostly parallel to the plane on which the current collector 110 is located (as 120B shown in FIG. 1), inactive planes are right opposite a negative electrode of the battery. In this case, migration paths of lithium increase, and the particles have good stability and are difficult to pulverize. If the lithium transition metal composite oxide is distributed with long axis diameters being mostly perpendicular to the current collector 110, as 120A shown in the figure, active planes are right opposite the negative electrode of the battery, so that the particles are prone to damage during processing, impacting the performance of the positive electrode. Controlling morphology of particles of the lithium transition metal composite oxide and regulating parameters including but not limited to pressure and pressure applying direction of cold pressing in a processing process can ensure that the ratio of Dp to Dv is within a specified range. In other words, in this manner, the lithium transition metal composite oxide has enough non-dominant planes right opposite the negative electrode of the battery, making the positive electrode have relatively good electrochemical performance and avoiding relatively poor cycling performance caused by dominant planes being excessively exposed on the side facing the electrolyte.

According to some examples of this application, when Dp/Dv is within a range of 1.1 to 2.3, the positive electrode material particles can be guaranteed to be evenly distributed on the current collector 110. In this case, in the direction right opposite the negative electrode of the battery, active planes and inactive planes of the lithium transition metal composite oxide are in their reasonable ranges which can be retained after processing. Dp/Dv being less than 1.1 means that the inactive crystal planes in the positive electrode right opposite the negative electrode of the battery are in a small number, making the lithium transition metal composite oxide easy to damage and pulverize; Dp/Dv being greater than 2.3 means that the lithium transition metal composite oxide on the surface of the positive electrode is too flat or over-pressed, impacting the electrochemical performance of the positive electrode.

It should be noted herein that, unless otherwise specifically stated in this application, the average particle size is an average diameter of particles. The average diameter is tested by using a slicer to treat the positive electrode at a randomly selected position so as to obtain a cross section. For particles in the cross section, diameters thereof in a parallel direction and in a vertical direction are measured and recorded. Diameter is a maximum length of a particle in a defined direction. The statistical method is to select particles from left to right and from top to bottom, with 100 particles counted for the average particle size. Dp of the oblique lithium transition metal composite oxide 120C shown in FIG. 1 is the maximum value of the length of the particle in direction A-A' in the cross section (as in the perspective shown in FIG. 1) of the positive electrode, and Dv of the lithium transition metal composite oxide 120C is the maximum value of the length of the particle in direction B-B'.

According to some examples of this application, the foregoing lithium transition metal composite oxide has a long-axis average particle size D₁ and a short-axis average particle size D₂, satisfing: 1.4≤(D₁/D₂)≤5.5. According to some examples of this application, 1.4≤(D₁/D₂)≤3.8. Therefore, the lithium transition metal composite oxide has a relatively good particle morphology, where active crystal planes and inactive crystal planes are in proper proportions.

According to some specific examples of this application, the long-axis average particle size D₁ satisfies 7µm≤D₁≤28µm. Therefore, the lithium transition metal composite oxide has a relatively good particle morphology, where the active crystal planes and the inactive crystal planes are in proper proportions.

According to some examples of this application, the foregoing lithium transition metal composite oxide further satisfies 5µm≤Dp≤25µm. Therefore, the lithium transition metal composite oxide has a relatively good orientation on the current collector, making more reasonable arrangements of dominant crystal planes and non-dominant crystal planes in particles, thereby making the positive electrode have relatively good high-voltage cycling performance.

According to some examples of this application, the lithium transition metal composite oxide may further satisfy 0.8≤(Dp+Dv)/2D_{N}50≤1.25. Drr50 is a median particle size of the lithium transition metal composite oxide. It can be understood by those skilled in the art that particle sizes of a typical cobalt-based positive material is not identical. The lithium transition metal composite oxide in the positive electrode may contain large particles, small particles, or a mixture of large particles and small particles. However, its particle sizes can be within a defined range. The above D_{N}50 according to this application is an average particle size of its median size particle. The above relationship among Dp, Dv, and D_{N}50 can be used to determine whether shape characteristics of a particle design of the lithium transition metal composite oxide are retained during processing. Specifically, the result of Dp+Dv being far greater or less than 2D_{N}50 means that the particles are damaged during processing or the lithium transition metal composite oxide is unevenly distributed on the surface of the current collector or has a chaotic orientation. All these are unfavorable for the play of its electrochemical performance. The result of (Dp+Dv)/2Drr50 being between 0.8 to 1.25 can ensure that the lithium transition metal composite oxide is not damaged during processing or damaged to an extent not great enough to impact the performance of the resulting positive electrode, and the lithium transition metal composite oxide can be evenly distributed on the surface of the current collector in an intended orientation.

According to some examples of this application, a specific chemical composition and structure of the lithium transition metal composite oxide are not specially limited, which can be selected by those skilled in the art according to actual requirements for battery performance. For example, according to some examples of this application, the lithium transition metal composite oxide has an R-3m space group structure. According to some examples of this application, the chemical composition of the lithium transition metal composite oxide may be Liₓ₁Ni_{y1}Co_{z1}MnₖZ_{q}O_{b-a}Tₐ, where Z includes at least one of B, Mg, Al, Si, P, S, Ti, Cr, Fe, Cu, Zn, Ga, Y, Zr, Mo, Ag, W, In, Sn, Pb, Sb and Ce, T is halogen, and x1, y1, z1, k, q, a and b respectively satisfy 0.2<x1≤1.2, 0≤y1≤1, 0≤z1≤1, 0≤k≤1, 0≤q≤1, 1≤b≤2, and 0≤a≤1. According to some examples of this application, the lithium transition metal composite oxide has a P63mc space group structure. According to some examples of this application, the chemical composition of the lithium transition metal composite oxide may be Liₓ₂Na_{z2}Co_{1-y2}M_{y2}O_{2±n}Xₙ, where 0.6<x2<0.95, 0≤y2<0.15, 0≤z2<0.03, and 0≤n≤0.2, M includes at least one of Al, Mg, Ti, Mn, Fe, Ni, Zn, Cu, Nb, Cr and Zr, for example, types of element M can be one, two, three, or more. When a plurality of elements M are contained, y is a sum of atomic ratios of the plurality of elements M. More specifically, x in Liₓ₂Na_{z2}Co_{1-y2}M_{y2}O_{2±n}Xₙ may satisfy 0.6<x<0.85.

According to some examples of this application, when an electrochemical apparatus including the positive electrode is discharged to 3.0 V, an X-ray diffraction spectrum of the lithium transition metal composite oxide has a characteristic peak P₃ in a range of 17° to 20°. In addition, the electrochemical apparatus including the positive electrode may present two phases when charged to 4.6 V, where the two phases have different lithium contents and the part having a low lithium content takes up a larger proportion, which means that when a battery cell having such positive electrode is charged to 4.6 V, the X-ray diffraction spectrum at least has a characteristic peak P₁ and a characteristic peak P₂ in a range of 17° to 20°, where a peak intensity I₁ of P₁ is greater than a peak intensity I₂ of P₂. The foregoing crystallinity determines the performance of the material. To be specific, better crystallinity makes the material more unlikely to pulverize and makes a better cycling stability. Specifically, a ratio I₁/I₃ of the peak intensity I₁ of P₁ to the peak intensity I₃ of P₃ is not less than 0.8. In other words, its crystallinity is reflected in that the peak intensity I₁ is close to the initial peak intensity I₃. I₁ being less than 0.8 I₃ means that the crystallinity of the material declines obviously. When the electrochemical apparatus including the positive electrode is discharged to 3.0 V, the lithium transition metal composite oxide returns to the initial state, in which case if the material cracks due to strain, I₃ may be less than I₁-I₂. However, if the initial peak intensity is greater than I₁+I₂, the material is likely to be pulverized under a high voltage. Specifically, pulverization is a process of crystallinity decline such as cracking, degrading, phase change of the lithium transition metal composite oxide. Therefore, the peak intensity I₃ of P₃ satisfying (I₁-I₂)≤I₃≤(I₁+I₂) can make the positive electrode have relatively good crystallinity and relatively good cycling performance.

According to some examples of this application, after the electrochemical apparatus is fully charged and then discharged to 3.0 V, the surface of the negative electrode has stripes parallel to a direction of creases. These stripes are tracks left by consumed additive in the negative electrode. Therefore, the lithium transition metal composite oxide in the positive electrode in combination with the structure of the negative electrode (for example, additives) allows more stable cycling performance, thereby keeping a stable structure of the positive electrode active material during charge and discharge in use of the positive electrode, which means few changes in a crystal structure of the material or Ii, I₂, and I₃ are more stable. In addition, after full discharge to the initial state, the shift and broadening of the I₃ peak of the material are both small. Generally, a shift of an XRD characteristic peak means a loss of active lithium and broadening of the peak means pulverization of the material.

The positive electrode according to the examples of this application can satisfy: when the electrochemical apparatus including the positive electrode has undergone 10 charge and discharge cycles in a range of 3.0 V to 4.6 V and is discharged to 3.0 V, a highest peak of the X-ray diffraction spectrum has a peak shift of no greater than 0.1° and a change rate of peak width at half height of the highest peak is below 5%. Therefore, the positive electrode according to this application has relatively good stability, with a small loss of active lithium and little pulverization of the positive electrode active material (the lithium transition metal composite oxide) during use of the material.

According to another aspect of this application, this application proposes an electrochemical apparatus. Referring to FIG. 2, the electrochemical apparatus 1000 includes a positive electrode 100, a separator 200, and a negative electrode 300. The positive electrode 100 is as mentioned above and the separator 200 separates the positive electrode 100 and the negative electrode 300. Therefore, the electrochemical apparatus has all the features and advantages of the foregoing positive electrode, and details are not described herein again. Generally speaking, that electrochemical apparatus has relatively good cycling performance and capacity.

It can be understood by those skilled in the art that the electrochemical apparatus may further include an electrolyte so as to implement functions of the electrochemical apparatus. Specific shape of the electrochemical apparatus is not particularly limited, which may be selected and designed by those skilled in the art according to actual requirements.

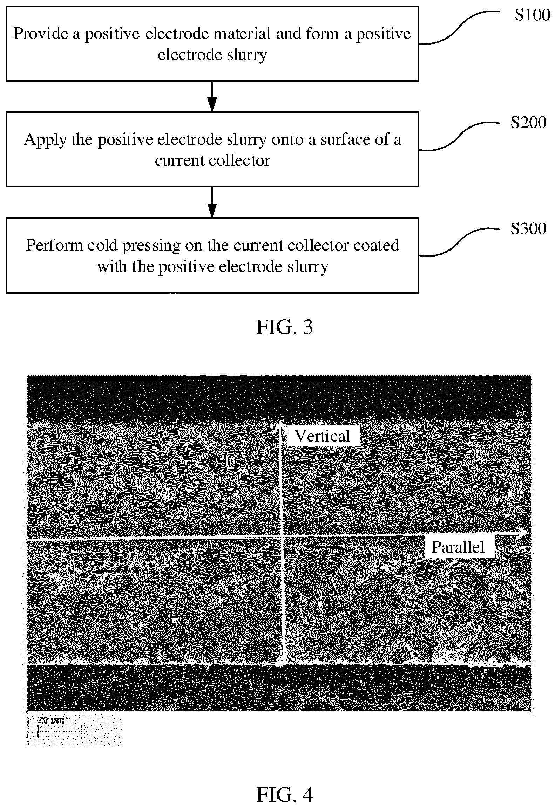

According to still another aspect of this application, this application proposes a preparation method of the foregoing positive electrode. Referring to FIG. 3, the method may include:
S 100: Provide a positive electrode material and form a positive electrode slurry.

According to some examples of this application, this step may include providing a lithium transition metal composite oxide and forming the positive electrode slurry. Specifically, the foregoing lithium transition metal composite oxide may be mixed with a conductive agent and a binder to form the positive electrode slurry.

According to some examples of this application, a weight ratio of the lithium transition metal composite oxide, the conductive agent, and the binder in the positive electrode slurry may be (94-99):(0.5-3):(0.5-3). Thereby, a positive electrode slurry having a proper ratio of the conductive agent, the lithium transition metal composite oxide, and the binder can be obtained. For example, specifically, the weight ratio of the lithium transition metal composite oxide, the conductive agent, and the binder in the positive electrode slurry may be 97:1.4:1.6.

Detailed description on a composition and morphology of the lithium transition metal composite oxide has been made above, which is not repeated herein. Those skilled in the art may select a proper lithium transition metal composite oxide according to specific requirements on the performance of the positive electrode. The specific type of the conductive agent is also not specially limited, which, for example, may be conductive carbon black, graphene, or the like. The binder may be but is not limited to polyvinylidene fluoride.

S200: Apply the positive electrode slurry onto a surface of a current collector.

According to some examples of this application, in this step, the positive electrode slurry formed earlier may be applied onto the surface of the current collector. Specific parameters and methods for applying the positive electrode slurry are not specially limited, provided that the positive electrode slurry can be evenly applied on the surface of one side of the current collector.

S300: Cold press the current collector coated with the positive electrode slurry.

According to some examples of this application, in this step, the current collector coated with the positive electrode slurry is cold pressed. Specifically, the cold pressing may be performed under a pressure of 30 to 40 tons with a cold pressing velocity being 3 to 4 m/min and a press density being controlled to 4.05 to 4.25 g/cm³.

Therefore, a positive electrode can be obtained which has an average particle size Dp of the lithium transition metal composite oxide in a direction parallel to a plane on which the current collector is located and an average particle size Dv of the lithium transition metal composite oxide in a direction perpendicular to the plane on which the current collector is located satisfying the aforesaid condition. That positive electrode has all the features and advantages of the foregoing positive electrode, which are not further described herein. Generally speaking, a positive electrode obtained using the method can have relatively good cycling performance.

The inventors have found that regulating the magnitude of pressure, velocity, and press density of cold pressing can control the lithium transition metal composite oxide having proper particle shapes to be distributed on the surface of the current collector evenly in an intended orientation. Thus, the morphology of the lithium transition metal composite oxide can be free from damage by manufacturing processes such as cold pressing and the arrangement of dominant crystal planes and non-dominant crystal planes in the lithium transition metal composite oxide on the surface of the current collector can be regulated to obtain a positive electrode having both good cycling performance and good electrical performance.

According to some examples of this application, after the positive electrode slurry is applied on the current collector and before the cold pressing is performed, drying the positive electrode slurry on the surface of the current collector may be further included. Specific parameters for the drying are not specially limited. Those skilled in the art may select the parameters and methods of the drying according to actual situations so as to obtain a slurry layer having an even thickness.

After the cold pressing, the current collector may further be cut. Thus, a positive electrode having a proper size can be obtained.

According to some examples of this application, the negative electrode of the electrochemical apparatus may further contain an additive. Therefore, applying the additive on a surface of a negative electrode active material layer may be further included. Specifically, the additive may be formed on the negative electrode active material layer by rolling. For example, the negative electrode coated with the additive may pass rollers in a speed of 0.5 to 2 m/s under a pressure of 5 to 30 tons. According to some examples of this application, the additive may include at least one of lithium powder, lithium strip, and lithium-containing compound. Thus, quality of an electrochemical apparatus obtained by using this method can be further improved.

### Examples

**Preparation of positive electrode plate:** The positive electrode material obtained in the examples below, conductive carbon black as a conductive agent, and polyvinylidene fluoride as a binder were mixed at a weight ratio of 97:1.5:1.5 in an N-methyl pyrrolidone (NMP) solution system, and the mixture was stirred thoroughly to form a positive electrode slurry. An aluminum foil was used as a current collector. The positive electrode slurry was applied on the current collector with a coating weight of 17.2 mg/cm², followed by drying, cold pressing, and cutting, to obtain a positive electrode plate.

**Preparation of negative electrode plate:** A copper foil was used as a current collector, artificial graphite was used as a negative electrode active material and styrene-butadiene rubber and sodium carboxy methyl cellulose were used as binders; the artificial graphite, styrene-butadiene rubber and sodium carboxy methyl cellulose were mixed in a weight ratio of 96:2:2 and then dispersed in deionized water to form a slurry, and the slurry was uniformly stirred and then applied onto the copper foil and dried to form a negative electrode active material layer. Then cold pressing was performed to obtain a negative electrode plate. In some examples, elementary lithium strips were further added to the surface of the negative electrode active material layer at an amount of 2.5 mg/cm² and then cold pressing was performed to obtain a negative electrode plate containing additive.

**Preparation of separator:** 8 µm thick polyethylene porous polymer film was used.

**Preparation of electrolyte:** Under an environment with a water concentration less than 10 ppm, lithium hexafluorophosphate (1.15mol/L) and a non-aqueous organic solvent were mixed (weight ratio of ethylene carbonate (EC), propylene carbonate (PC), and diethyl carbonate (DEC) = 1:1:1) to obtain an electrolyte.

**Preparation of lithium-ion battery:** The positive electrode plate, separator, and negative electrode plate were stacked in sequence, so that the separator was sandwiched between the positive electrode and the negative electrode for separation, and the stack was wound to obtain an electrode assembly. The electrode assembly was placed in an outer packaging aluminum-plastic film, and was dehydrated under 80°C. Then the above electrolyte was injected and the package was sealed, followed by processes such as formation, degassing, and shaping, to obtain a lithium-ion battery.

**Observation method of stripes on the negative electrode:** After fully charged and then discharged to 3.0 V, the lithium-ion battery was disassembled in a dry room or a glove box. The negative electrode was spread and placed flat, and a sharp picture of it with proper times was taken by a camera, and observation was conducted to determine whether there were stripes on the surface of the negative electrode.

**Testing method of cycling performance:** The battery was charged to 4.6 V with a constant current of 0.7C at a temperature of 25°C, then charged under a constant voltage to the cutoff current of 0.025C, and then discharged to 3.0 V at 0.5C. Given a discharge capacity of the first cycle being 100%, a capacity retention rate of the lithium-ion battery after 200 cycles was recorded.

**Testing method of X-ray powder diffraction:** The lithium-ion battery was adjusted to a corresponding voltage at a current density of 10 mA/s, and left standing for 5 min, and then was disassembled in a glove box or a dry room. The center part of the positive electrode was selected and cut to obtain plates of a size of 3×3 cm. Characterization was performed on a Bruker X-ray powder diffractometer and diffraction peaks in a rage of 10-80° were acquired at an acquisition rate of 1° per minute.

**Testing method of Dp and Dv:** The positive electrode plate was taken and treated by a slicer to obtain a cross section perpendicular to the surface of the current collector. For particles in the cross section, diameters thereof in a direction parallel to the plane on which the current collector was located and in a direction perpendicular to the plane on which the current collector was located were measured and recorded. Diameter is a maximum length of a particle in a defined direction. The statistical method is to select particles from left to right and from top to bottom, with 100 particles counted for the average particle size.

### Example 1

Cobalt nitrate and aluminum nitrate were mixed at a molar ratio of Co:Al=99:1 and dissolved in deionized water of 5 times mass. Sodium carbonate and ammonia were added to modify the pH of the system to 8.2, followed by stirring thoroughly for 24 hours, to obtain a sediment. An additive, ammonium oxalate, with mass 0.5% that of the sediment was added to the sediment, followed by uniformly mixing and sintering at a temperature of 800°C for 24 hours to obtain a precursor. The precursor was uniformly mixed with sodium carbonate with a stoichiometric ratio of Co:Na being 0.99:0.75, followed by reacting at a temperature of 800°C for 36 hours, to obtain a powder material. The powder material was thoroughly ground for 3 hours, then was uniformly mixed with lithium nitrate at a molar ratio of Na:Li=1:5, followed by reacting at a temperature of 250°C for 8 hours. The reaction product was washed more than five times with deionized water, and then the powder was dried to obtain a positive electrode material Li_{0.73}Na_{0.01}Co_{0.99}Al_{0.01}O₂. The positive electrode material powder Li_{0.73}Na_{0.01}Co_{0.99}Al_{0.01}O₂ was mixed with a conductive agent and a binder at a mass ratio of 97:1.5:1.5 and dissolved in NMP to form a slurry. The slurry was applied on the surface of an Al current collector and dried in an oven at a temperature of 120°C for 2 hours. Then cold pressing was performed under a pressure of 35 tons with a cold pressing velocity being 3.5 m/min and the press density being controlled to 4.15 g/cm³. Cutting was performed to obtain a positive electrode plate.

Elementary lithium strips, as an additive, were disposed on the surface of the negative electrode active material layer, at an amount of 2.5 mg/cm² and rolling was performed to obtain a negative electrode plate containing additive.

### Example 2

Cobalt nitrate and titanium nitrate were mixed at a ratio of Co:Ti=95:5 and dissolved in deionized water of 5 times mass. Sodium carbonate and ammonia were added to modify the pH of the system to 6.5, followed by stirring thoroughly for 12 hours, to obtain a sediment. An additive, sodium bicarbonate, with mass 0.5% that of the sediment was added to the sediment, followed by uniformly mixing and sintering at a temperature of 750°C for 24 hours, to obtain a precursor. The precursor was uniformly mixed with sodium carbonate with a stoichiometric ratio of Co:Na being 0.95:0.76, followed by reacting at a temperature of 800°C for 36 hours, to obtain a powder material. The powder material was thoroughly ground for 3 hours, then was uniformly mixed with lithium nitrate at a ratio of Na:Li=1:5, followed by reacting at a temperature of 250°C for 8 hours. The reaction product was washed more than five times with deionized water, and the powder was dried to obtain a positive electrode material Li_{0.74}Na_{0.01}Co_{0.95}Ti_{0.05}O₂.

The slurry, the parameters of cold pressing, and the additive were all the same as those in Example 1.

**Example 3:** Prepared in the same method as Example 1, except that the pH of the system was adjusted to 8.7, followed by stirring thoroughly for 24 hours and sintering at a temperature of 900°C for 36 hours, to obtain a precursor and finally to obtain a positive electrode material Li_{0.73}Na_{0.01}Co_{0.99}Al_{0.01}O₂.

**Example 4:** Prepared in the same method as Example 2, except that the pH of the system was adjusted to 8.5 with sodium carbonate and ammonia added, followed by stirring thoroughly for 24 hours and sintering at a temperature of 950°C for 48 hours, to obtain a precursor.

**Example 5:** Prepared in the same method as Example 1, except that the reacting took place at a temperature of 850°C for 24 hours after the precursor was uniformly mixed with sodium carbonate, to obtain a powder material. The powder was thoroughly ground for 3 hours and then was uniformly mixed with lithium nitrate at a molar ratio of Na:Li=1:5, followed by reacting at a temperature of 450°C for 12 hours. Cold pressing was performed at a pressure of 36 tons with a cold pressing velocity being 3 m/min and a press density being controlled to 4.16 g/cm³.

**Example 6:** Prepared in the same method as Example 1, except that the negative electrode plate was not modified by the additive.

**Example 7:** Prepared in the same method as Example 1, except that the reaction took place at 950°C for 48 hours to obtain a precursor.

**Example 8:** Li_{0.7}CoO₂ having an R-3m space group structure was used as the positive electrode material. The slurry and the parameters of cold pressing were the same as those in Example 1. The negative electrode plate was not modified by the additive.

**Example 9:** Li_{0.75}Co_{0.86}Mg_{0.14}O₂ having an R-3m space group structure was used as a positive electrode material. The slurry and the parameters of cold pressing were the same as those in Example 1. The negative electrode plate was not modified by the additive.

**Example 10:** Li_{0.99}Co_{0.99}Al_{0.01}O₂ having an R-3m space group structure was used as a positive electrode material. The slurry and the parameters of cold pressing were the same as those in Example 1. The negative electrode plate was not modified by the additive.

### Comparative Example 1

Cobalt nitrate and aluminum nitrate were mixed at a ratio of Co:A1=99:1 and dissolved in deionized water of 5 times mass. Sodium carbonate and ammonia were added to modify the pH of the system to 9.8, followed by stirring thoroughly for 36 hours, to obtain a sediment. An additive, ammonium oxalate, with mass 0.5% that of the sediment was added to the sediment, followed by uniformly mixing and sintering at a temperature of 600°C for 24 hours, to obtain a precursor. The precursor was uniformly mixed with sodium carbonate with a stoichiometric ratio of Co:Na being 0.99:0.77, followed by reacting at a temperature of 1000°C for 36 hours, to obtain a powder material. The powder material was thoroughly ground for 3 hours, then was uniformly mixed with lithium nitrate at a ratio of Na:Li=1:5, followed by reacting at a temperature of 600°C for 8 hours. The reaction product was washed more than five times with deionized water, and the powder was dried to obtain a positive electrode material Li_{0.76}Na_{0.01}Co_{0.99}Al_{0.01}O₂.

The slurry and the parameters of cold pressing were the same as those in Example 1. The negative electrode plate was not modified by the additive.

**Comparative Example 2:** Prepared in the same method as Comparative Example 1, except that the pH of the system was modified to 11.8 with sodium hydroxide added.

**Comparative Example 3:** Prepared in the same method as Comparative Example 1, except that the sintering was performed at 1000°C for 24 hours to obtain a precursor, followed by reacting at 1050°C for 24 hours to obtain a powder material. The negative electrode plate was not modified by the additive.

**Comparative Example 4:** Prepared in the same method as Example 8, except that Li_{0.88}CoO₂ having an R-3m space group structure was used as a positive electrode material.

**Comparative Example 5:** Prepared in the same method as Example 1, except that the cold pressing was performed at a pressure of 65 tons with a cold pressing velocity being 6 m/min and a press density being controlled to 4.29 g/cm⁶. The negative electrode plate was not modified by the additive.

**Comparative Example 6:** Prepared in the same method as Example 10, except that Li_{0.99}Co_{0.99}Al_{0.01}O₂ having an R-3m space group structure with D1 being 6.4 µm and D2 being 4.6 µm was used as a positive electrode material. The press density of cold pressing is 3.94 g/cm³.

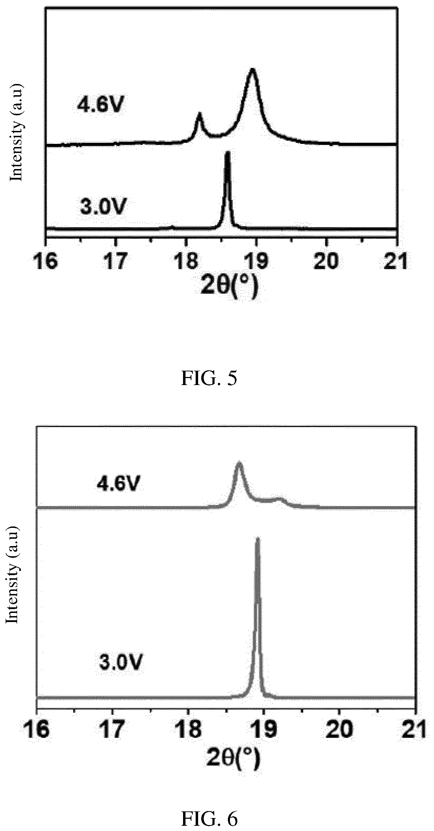

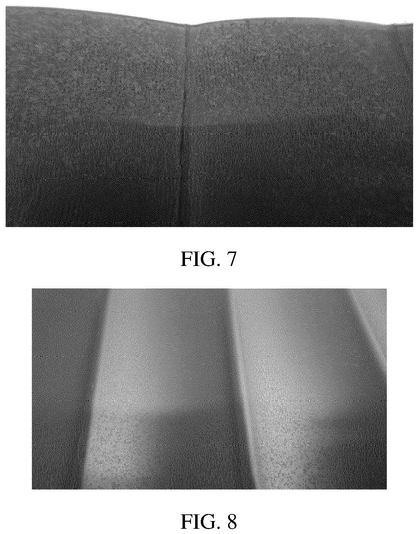

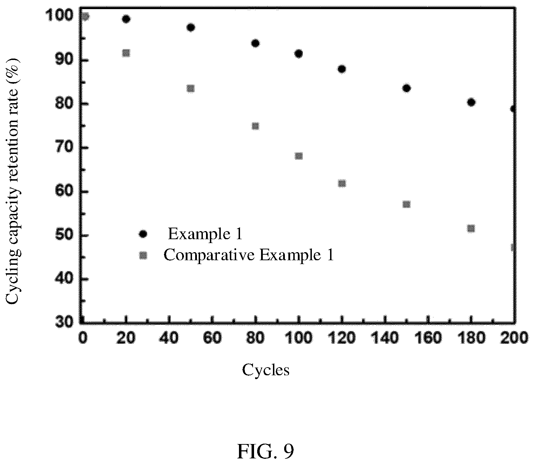

An X-ray powder diffraction test was performed on Example 1 and Comparative Example 1. Referring to FIG. 5 and FIG. 6, under corresponding voltages (4.6 V and 3.0 V), the broadening and peak shifts of characteristic peaks of Example 1 were all smaller than those of Comparative Example 1. Referring to FIG. 7 and FIG. 8, twisted stripes occurring in Example 1 did not occur on the surface of Comparative Example 1. Referring to FIG. 9, the cycling capacity retention rate of Comparative Example 1 declined greatly. The testing results of the examples and comparative examples are shown in Table 1 below, in which Y means presence of stripes on the negative electrode while N means absence of stripes on the negative electrode.

**Table 1**

| Space group structure | | D1 (µm) | D2 (µm) | D1/D2 | Dp (µm) | Dv (µm) | Dp/Dv | D_{N}50 (µm) | (Dp+Dv)/2D_{N}50 | Stripes on negative electrode? | Retention rate after 200 cycles at 4.6 V |
|---|---|---|---|---|---|---|---|---|---|---|---|
| P63mc | Example 1 | 17.7 | 10.5 | 1.69 | 15.7 | 11.8 | 1.33 | 13.6 | 1.01 | Y | 78.9% |
| | Example 2 | 6.2 | 2.9 | 2.14 | 5.9 | 3.1 | 1.90 | 3.9 | 1.15 | Y | 69.3% |
| | Example 3 | 24.3 | 17.4 | 1.40 | 22.7 | 19.9 | 1.14 | 18.4 | 1.15 | Y | 65.1% |
| | Example 4 | 25.2 | 6.8 | 3.71 | 21.2 | 10.5 | 2.02 | 19.4 | 0.82 | Y | 60.6% |
| | Example 5 | 17.9 | 14.6 | 1.23 | 17.2 | 15.3 | 1.12 | 22.6 | 0.72 | Y | 57.2% |
| | Example 6 | 17.7 | 10.5 | 1.69 | 15.7 | 11.8 | 1.33 | 13.6 | 1.01 | N | 68.9% |
| | Example 7 | 19.2 | 12.0 | 1.6 | 18.3 | 14.5 | 1.26 | 15.5 | 1.06 | Y | 70.4% |
| R-3m | Example 8 | 16.8 | 11.2 | 1.5 | 15.1 | 12.9 | 1.17 | 11.3 | 1.24 | N | 69.5% |
| | Example 9 | 14.1 | 8.9 | 1.58 | 12.2 | 10.0 | 1.22 | 10.8 | 1.03 | N | 72.2% |
| | Example 10 | 16.9 | 9.7 | 1.74 | 15.9 | 11.2 | 1.42 | 12.9 | 1.05 | N | 72.3% |

| Space group structure | | D1 (µm) | D2 (µm) | D1/D2 | Dp (µm) | Dv (µm) | Dp/Dv | D_{N}50 (µm) | (Dp+Dv)/2D_{N}50 | Stripes on negative electrode? | Retention rate after 200 cycles at 4.6 V |
|---|---|---|---|---|---|---|---|---|---|---|---|
| P63mc | Comparative Example 1 | 27.7 | 23.4 | 1.18 | 26.0 | 24.9 | 1.04 | 20.3 | 1.25 | N | 47.3% |
| | Comparative Example 2 | 30.6 | 8.9 | 3.44 | 29.2 | 10.7 | 2.73 | 25.6 | 0.58 | Y | 39.1% |
| | Comparative Example 3 | 31.6 | 23.1 | 1.37 | 25.4 | 29.3 | 0.87 | 15.2 | 1.80 | N | 36.4% |
| R-3m | Comparative Example 4 | 20.3 | 14.8 | 1.37 | 12.8 | 19.2 | 0.64 | 10.9 | 1.47 | N | 32.1% |
| P63mc | Comparative Example 5 | 17.7 | 10.5 | 1.69 | 15.5 | 15.4 | 1.01 | 14.1 | 1.10 | N | 55.4% |
| R-3m | Comparative Example 6 | 6.4 | 4.6 | 1.39 | 6.2 | 5.9 | 1.05 | 5.6 | 1.08 | N | 41.2% |

As can be seen from Table 1, no matter whether the positive electrode material has a P63mc structure or an R-3m structure, the examples having Dp/Dv in the range defined by this application have better cycling performance than the comparative examples. As can be seen from Examples 1 to 10, with (Dp+Dv)/2Drr50 being in a range of 0.8 to 1.25, better cycling stability can be obtained. As can be seen from a comparison drawn between Example 1 and Example 6, supplementing lithium to the positive electrode material having the P63mc structure can further improve its cycling stability.

In addition, as can be seen from Comparative Examples 1 and 5, when the ratio D1/D2 of the long-axis average particle size D₁ and short-axis average particle size D₂ of the positive electrode material is too small and/or conditions of the cold pressing are not appropriate, Dp/Dv defined by this application is difficult to achieve and the cycling stability is also poor.

An X-ray powder diffraction test was performed on the samples of part of the examples and comparative examples. testing results are given in Table 2 below.

**Table 2**

| | I1 | I2 | I3 | I1/I3 | Retention rate after 200 cycles at 4.6 V |
|---|---|---|---|---|---|
| Example 1 | 1.01 | 0.4 | 1.0 | 1.01 | 78.9% |
| Example 7 | 1.42 | 0.64 | 1.73 | 0.82 | 70.4% |
| Comparative Example 1 | 0.41 | 0.09 | 1.46 | 0.28 | 47.3% |

As can be seen from Table 2, I₁/I₃ of Comparative Example 1 is less than 0.8, which means having a risk of pulverization under high voltage. Therefore, the cycling retention rate of Comparative Example 1 is obviously lower than those of the examples.

After 8 cycles, the I₂/I₃ change rate, peak shift and change rate of peak width at half height of X-ray powder diffraction were tested and the testing results are given in Table 3 below.

**Table 3**

| | Active material | Cycles | Change rate of discharge gram capacity C2 | I₂/I₃ change rate | Peak shift | Change rate of peak width at half height | Retention rate after 200 cycles at 4.6 V |
|---|---|---|---|---|---|---|---|
| Example 1 | Li_{0.73}Na_{0.01}Co_{0.99}Al_{0.01}O₂ | 8 | 0.07% | 0.08% | 0.0002 | 0.3% | 78.9% |
| Example 8 | Li_{0.7}CoO₂ | 8 | 0.11% | 0.09% | 0.0011 | 2.4% | 69.5% |
| Example 9 | Li_{0.75}Co_{0.86}Mg_{0.14}O₂ | 8 | 0.09% | 0.06% | 0.0002 | 1.1% | 72.2% |
| Comparative Example 4 | Li_{0.88}CoO₂ | 8 | 0.23% | 0.18% | 0.1100 | 5.33% | 32.1% |

As can be seen from Table 3, Examples 1, 8, and 9 have smaller peak shifts and obviously lower I₂/I₃ change rates and half-height peak width change rates than Comparative Example 4, which means better stability. The retention rate after 200 cycles at 4.6 V also proves the above viewpoint.

The above are merely examples of this application which are not intended to limit this application in any form. Although this application is disclosed as above using preferred embodiments, these embodiments are not intended to limit this application. Any changes or modifications made by any person skilled in the art based on the technical content disclosed above are equivalent embodiments within the scope of the technical solutions of this application, provided that such changes or modifications do not depart from the scope of the technical solutions of this application.

## Claims

1. A positive electrode, comprising:
a positive electrode active material layer on a current collector,
wherein the positive electrode active material layer comprises a lithium transition metal composite oxide; and
in a direction parallel to a plane on which the current collector is located, an average particle size of the lithium transition metal composite oxide is Dp, and in a direction perpendicular to the plane on which the current collector is located, an average particle size of the lithium transition metal composite oxide is Dv, wherein: 1.1≤Dp/Dv≤2.3.

2. The positive electrode according to claim 1, wherein the lithium transition metal composite oxide satisfies 5µm≤Dp≤25µm.

3. The positive electrode according to claim 1, wherein the lithium transition metal composite oxide satisfies:
0.8≤(Dp+Dv)/2D_{N}50≤1.25, wherein D_{N}50 is a median particle size of the lithium transition metal composite oxide.

4. The positive electrode according to claim 1, satisfying at least one of the following conditions:
a) the lithium transition metal composite oxide has an R-3m space group structure; and the lithium transition metal composite oxide comprises Liₓ₁Ni_{y1}Co_{z1}MnₖZ_{q}O_{b-a}Tₐ, wherein Z comprises at least one of B, Mg, Al, Si, P, S, Ti, Cr, Fe, Cu, Zn, Ga, Y, Zr, Mo, Ag, W, In, Sn, Pb, Sb and Ce, T is halogen, and x1, y1, z1, k, q, a, and b respectively satisfy 0.2<x1≤1.2, 0≤y1≤1, 0≤z1≤1, 0≤k≤1, 0≤q≤1, 1≤b≤2 and 0≤a≤1;
b) the lithium transition metal composite oxide has a P63mc space group structure; and the lithium transition metal composite oxide comprises Liₓ₂Na_{z2}Co_{1-y2}M_{y2}O_{2±n}Xₙ, wherein 0.6<x2<0.95, 0≤y2<0.15, 0≤z2<0.03, and 0≤n≤0.2, M comprises at least one of Al, Mg, Ti, Mn, Fe, Ni, Zn, Cu, Nb, Cr and Zr, and X is halogen.

5. The positive electrode according to claim 1, wherein the lithium transition metal composite oxide has a long-axis average particle size D₁ and a short-axis average particle size D₂, satisfying: 1.4≤(D₁/D₂)≤5.5.

6. The positive electrode according to claim 5, wherein the lithium transition metal composite oxide satisfies 7µm≤D₁≤28µm.

7. The positive electrode according to claim 1, wherein when an electrochemical apparatus comprising the positive electrode is charged to 4.6 V, the positive electrode satisfies that an X-ray diffraction spectrum at least has a characteristic peak P₁ and a characteristic peak P₂ in a range of 17° to 20°, wherein a peak intensity I₁ of P₁ is greater than a peak intensity I₂ of P₂; and
when the electrochemical apparatus is discharged to 3.0 V, the positive electrode satisfies that an X-ray diffraction spectrum has a characteristic peak P₃ in a range of 17° to 20°, wherein a peak intensity I₃ of P₃ satisfies (I₁-I₂)≤I₃≤(I₁+I₂).

8. The positive electrode according to claim 7, wherein a ratio I₁/I₃ of the peak intensity I₁ of P₁ to the peak intensity I₃ of P₃ is not less than 0.8.

9. The positive electrode according to claim 1, wherein the positive electrode satisfies: when an electrochemical apparatus comprising the positive electrode has undergone 8 charge and discharge cycles in a range of 3.0 V to 4.6 V and is discharged to 3.0 V, a highest peak of an X-ray diffraction spectrum of the positive electrode having undergone the cycles has a peak shift of no greater than 0.1° with respect to the positive electrode without undergoing the cycles; and a change rate of peak width at half height of the highest peak is below 5%.

10. An electrochemical apparatus, comprising a positive electrode, a negative electrode, and a separator, wherein the positive electrode is the positive electrode according to any one of claims 1 to 9.

11. The electrochemical apparatus according to claim 10, wherein when the electrochemical apparatus is discharged to 3.0 V, a surface of the negative electrode has strips.

12. An electronic apparatus, comprising the electrochemical apparatus according to claim 10 or 11.
